# EUROPEAN PATENT SPECIFICATION

(11) **EP 3 070 853 B1**
(45) Date of publication and mention of the grant of the patent: **14.11.2018**
(21) Application number: 14797674.0
(22) Date of filing: 19.05.2014
(51) Int. Cl.: H04B 1/7113, G06F 9/50

(54) **TASK PROCESSING METHOD AND DEVICE FOR IMPLEMENTING MULTIPATH SEARCHING**
AUFGABENVERARBEITUNGSVERFAHREN UND VORRICHTUNG ZUR AUSFÜHRUNG EINER MEHRPFADSUCHE
PROCÉDÉ ET DISPOSITIF DE TRAITEMENT DE TÂCHES POUR LA MISE EN OEUVRE DE RECHERCHE MULTI-TRAJETS

(30) Priority: 11.11.2013 CN 201310558104
(43) Date of publication of application: 21.09.2016
(73) Proprietor: Sanechips Technology Co., Ltd., Shenzhen (CN)
(72) Inventor: XIE, Weicong, Yantian Shenzhen Guangdong 518085 (CN); YANG, Haitao, Yantian Shenzhen Guangdong 518085 (CN)
(74) Representative: Studio Torta S.p.A.
(86) International application number: PCT/CN2014/077833
(87) International publication number: WO 2014/183684

(56) References cited:
- EP-A1- 2 458 930
- CN-A- 101 978 617
- CN-A- 103 259 587
- US-A1- 2003 103 557
- US-A1- 2004 151 233
- US-A1- 2004 166 808

## Description

### TECHNICAL FIELD

The present disclosure relates to the multipath searching technology in WCDMA (Wideband-Code Division Multiple Access), especially to a task processing method and device for implementing a multipath searching.

### BACKGROUND

In WCDMA system, a base station delivers received antenna data to a baseband module for processing. During this procedure, the processing of the baseband module has different processing delays depending on different channel coding schemes, circuit implementations, and task scheduling solutions. The antenna data is sent in real time. The base station should not miss the antenna data at any moment. Thereby, it is necessary to buffer the real-time antenna data into an antenna data caching module. In addition, unique caching enables modules, such as a multipath searching module and a multipath demodulation module, to share the antenna data via a bus, and supports the multipath searching and the multipath demodulation on various antenna data streams. EP 2 458 930 A1 shows a method for parameter update in an uplink baseband chip at NodeB side of a WCDMA system.

However, the multipath searching module needs to read the antenna data in the antenna data caching module in every searching period, thus mass of band widths are occupied, and the performance of the system is affected. Therefore, how to reduce the band width occupied by reading and writing the antenna data, and improve the performance of the system is an urgent and important problem.

### SUMMARY

In order to solve the existing technical problems, the embodiments of the present disclosure mainly provide a task processing method and device for implementing multipath searching.

The technical solutions of the present disclosure are implemented as follows.

The embodiments of the present disclosure provide a task processing method for implementing multipath searching, including: searching a task information table at regular time to obtain a task to be processed on each antenna, and ranking all the antennas depending on numbers of effective search resources occupied by the antennas; and processing the tasks to be processed on all the antennas according to the rank.

The embodiments of the present disclosure also provide a task processing device for implementing multipath searching, including: a task state machine control module and a task finding module, wherein
the task state machine control module is configured to achieve a state control to the task finding module, and
the task finding module is configured to search a task information table at regular time to obtain a task to be processed on each antenna, rank all the antennas depending on numbers of effective search resources occupied by the antennas, and process the tasks to be processed on all the antennas according to the rank.

The task processing method and device for implementing multipath searching provided by the embodiments of the present disclosure search the task information table at regular time to obtain the task to be processed on each antenna, rank all the antennas depending on the numbers of effective search resources occupied by the antennas, and process the tasks to be processed on all the antennas according to the rank. In this way, the frequency of requesting the antenna data can be greatly reduced, and each antenna only needs to be requested once, which efficiently decreases the occupied band width of the bus, and improves the performance of the system. In particular, on average, assuming that X tasks are evenly distributed on Y antennas, then by adopting the method of the embodiments of the present disclosure, the antenna data only needs to be requested for Y times, and compared with the practice in the related art in which the antenna data needs to be requested according to tasks, the band width occupied by the method of the embodiments in the present disclosure is only Y/X of that in the method in the related art. In a most extreme case, assuming that X tasks are concentrated on one antenna, then the band width occupied in the embodiments of the present disclosure is only 1/X of that in the method of the related art.

This section provides a summary of various implementations or examples of the technology described in the disclosure, and is not a comprehensive disclosure of the full scope or all features of the disclosed technology.

### BRIEF DESCRIPTION OF THE DRAWINGS

Fig. 1 is a flowchart of a task processing method for implementing multipath searching according to an embodiment of the present disclosure;
Fig. 2 is a flowchart of another task processing method for implementing multipath searching according to an embodiment of the present disclosure; and
Fig. 3 is a structural schematic diagram of a task processing device for implementing multipath searching according to an embodiment of the present disclosure.

### DETAILED DESCRIPTION

In embodiments of the present disclosure, a task information table is searched at regular time to obtain a task to be processed on each antenna, all the antenna are ranked depending on numbers of effective search resources occupied by the antennas, and then the tasks to be processed on all the antenna are processed according to the rank.

Before searching the task information table at regular time, the embodiments of the present disclosure further include: reading a task request at regular time, and updating a task parameter in the task information table.

Correspondingly, searching the task information table at regular time is implemented by searching the updated task information table at regular time.

Hereinafter, further detailed explanations are given in combination with drawings and specific embodiments.

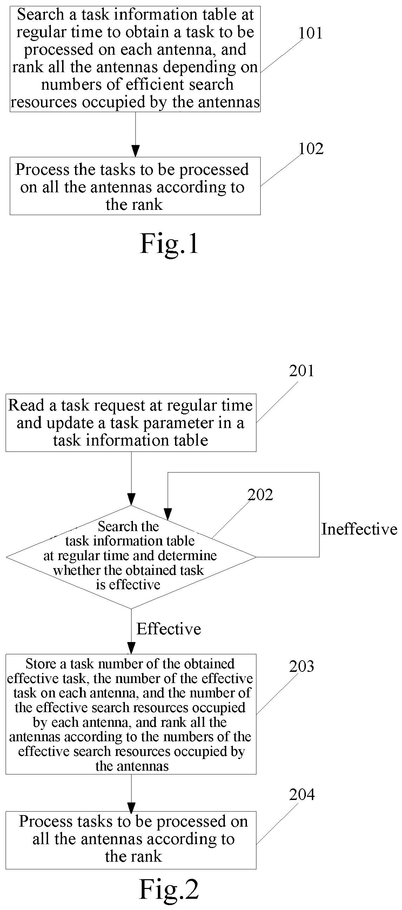

Fig. 1 is a flowchart of a task processing method for implementing multipath searching according to an embodiment of the present disclosure. As shown in Fig. 1, the flow of the task processing method for implementing multipath searching includes the following steps.

In step 101, a task information table is searched at regular time to obtain a task to be processed on each antenna, and all the antenna are ranked depending on numbers of effective search resources occupied by the antennas.

Herein, before searching the task information table at regular time, the method further includes: reading a task request at regular time, and updating a task parameter in the task information table.

The reading the task request at regular time, and updating the task parameter in the task information table includes:

reading a task request in each slot (1 frame = 15 slots = 38400chips) based on a system timing, reading a task parameter of an address corresponding to a task number carried in the task request, and updating the read task parameter into the task information table corresponding to the task number.

Generally, a configuration cycle of the task request is one slot, which is divided into two portions: preceding M chips and later N chips. Values of M and N may be set automatically according to actual conditions. The preceding M chips are for issuing time of the task request, and the later N chips are for reading time of the task request, wherein the issuing time of the task request is prior to the reading time of the task request.

The task parameter includes an antenna number, a width of search window, a scrambling, and the like.

The task information table uses the task number as an address index. The task information table saves task states therein, i.e., whether the task is effective or whether an effective time of the task has started.

Accordingly, the searching the task information table at regular time includes:
starting the search to the task information table in the beginning of each slot, searching and reading the updated task information table according to the task number sequentially, and writing the task number of the read effective task into a corresponding antenna linked list according to an antenna number included in the task parameter read from the task information table, until the search to the entire task information table is completed, in this way, the antenna linked lists of different antenna numbers, a sum of tasks to be processed on different antennas, and a sum of effective search resources occupied by each antenna would be obtained.

The antenna linked list stores the task number of an effective task previous to the effective task of the current task number in this slot of this antenna by using the task number as an index.

In step 102, tasks to be processed on all the antennas are processed according to the rank.

Herein, processing tasks to be processed on all the antennas according to the rank is specifically implemented by:

reading an antenna number of an antenna which occupies the most effective search resources according to the rank of the numbers of the effective search resources occupied by all the antennas, reading a last effective task number on the antenna according to the antenna number, reading a task parameter of a corresponding address in the task information table according to the effective task number, writing the task into a task running storage area, and reading a previous effective task number on the antenna, until all the effective tasks on this antenna are written into the task running storage area, and the process to the antenna tasks is completed; and then processing the antenna which occupies the second most effective search resources; and so on, till all the antennas are processed.

Fig. 2 is a flowchart of another task processing method for implementing multipath searching according to an embodiment of the present disclosure. As shown in Fig. 2, the flow of the task processing method for implementing multipath searching includes the following steps.

In step 201, a task request is read at regular time and a task parameter in a task information table is updated.

Herein, reading the task request at regular time and updating the task parameter in the task information table includes:

reading a task request in each slot (1 frame = 15 slots = 38400chips) based on a system timing, reading a task parameter of an address corresponding to a task number carried in the task request, and updating the read task parameter into the task information table corresponding to the task number.

Generally, a configuration cycle of the task request is one slot, which is divided into two portions: preceding M chips and later N chips. Values of M and N may be set automatically according to actual conditions. The preceding M chips are for issuing time of the task request, and the later N chips are for reading time of the task request, wherein the issuing time of the task request is prior to the reading time of the task request.

The task parameter includes an antenna number, a width of search window, a scrambling, and the like.

In step 202, the task information table is searched at regular time and whether the obtained task is effective is determined; if the task is effective, step 203 is performed; and if the task is ineffective, step 202 is continued to be performed.

Herein, searching the task information table at regular time and determining whether the obtained task is effective includes: starting the search to the updated task information table in the beginning of each slot, searching the task information table according to the task number sequentially, and determining whether the obtained task is effective based on a task state saved in the task information table.

In step 203, a task number of the obtained effective task, the number of the effective tasks on each antenna, and the number of the effective search resources occupied by each antenna are stored, and all the antennas are ranked according to the numbers of the effective search resources occupied by the antennas.

Herein, the task information table uses the task number as an address index, and the task information table also stores the task state therein, i.e., whether the task is effective or whether an effective time of the task has started.

Accordingly, searching the task information table at regular time includes:

starting the search to the updated task information table in the beginning of each slot, searching and reading the task information table according to the task number sequentially, and writing the task number of the read effective task into a corresponding antenna linked list according to an antenna number included in the task parameter read from the task information table, until the search to the entire task information table is completed, in this way, the antenna linked lists of different antenna numbers, a sum of tasks to be processed on different antennas, and a sum of effective search resources occupied by each antenna would be obtained.

The antenna linked list stores the task number of an effective task previous to the effective task of the current task number in this slot of this antenna by using the task number as an index.

In step 204, tasks to be processed on all the antennas are processed according to the rank.

Herein, processing tasks to be processed on all the antennas according to the rank includes:
reading an antenna number of an antenna which occupies the most effective search resources according to the rank of the numbers of the effective search resources occupied by all the antennas, reading a last effective task number on the antenna according to the antenna number, reading a task parameter of a corresponding address in the task information table according to the effective task number, writing the task into a task running storage area, and reading a previous effective task number on the antenna, until all the effective tasks on the antenna are written into the task running storage area, and the process to the antenna task is completed, and so on; and then processing the antenna which occupies the second most effective search resources, till all the antennas are processed.

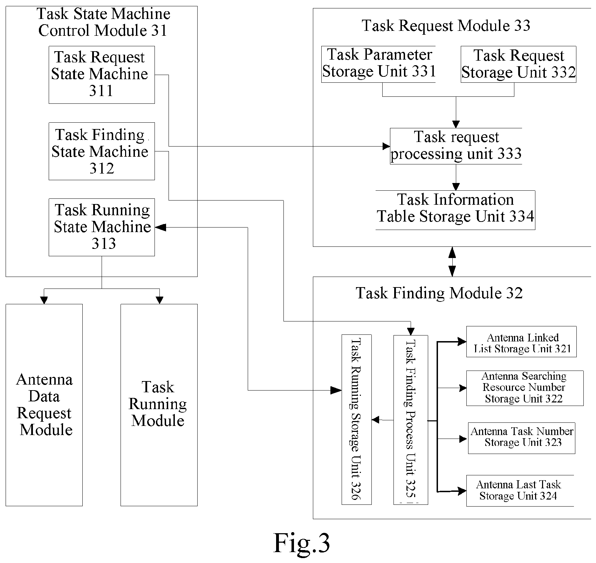

Fig. 3 is a structural schematic diagram of a task processing device for implementing multipath searching according to an embodiment of the present disclosure. For sake of explanation, in addition to the task processing device, two modules, i.e., an antenna data requesting module and a task running module, are added in Fig. 3, for assisting explanations of functions of each module in the task processing device.

As shown in Fig. 3, the task processing device for implementing multipath searching according to an embodiment of the present disclosure includes: a task state machine control module 31 and a task finding module 32.

The task state machine control module 31 may be a state controller configured to achieve a state control to the task finding module 32.

The task finding module 32 may be a combination of a processor and a memory, and configured to search a task information table at regular time to obtain a task to be processed on each antenna, rank numbers of effective searching resources occupied by all the antenna, and process the tasks to be processed on all the antenna according to the rank.

Preferably, the device further includes: a task request module 33 configured to read the task request at regular time and update a task parameter in the task information table.

Preferably, the task state machine control module 31 is further configured to achieve a state control to the task request module 33 and a state control to the task running.

Preferably, the task state machine control module 31 includes: a task request state machine 311, a task finding state machine 312, and a task running state machine 313. Respective state machines control the processing procedure of task requesting, the task searching and the task running in parallel.

The task request state machine 311 is configured to achieve a state control to the task request in the task request module 33.

The task finding state machine 312 is configured to achieve a state control to the task finding in the task finding module 32.

The task running state machine 313 is configured to achieve a state control to the task running.

In particular, the state control to the task running is as follows: reading a task parameter of an effective task on different antennas from the task running storage unit 326, requesting antenna data and issuing a task per antennas according to a rank of the numbers of occupied searching resources.

Preferably, the task finding module 32 includes: an antenna linked list storage unit 321, an antenna searching resource storage unit 322, an antenna task number storage unit 323, an antenna last task storage unit 324, a task running storage unit 326, and a task finding process unit 325.

The antenna linked list storage unit 321 is configured to store an antenna linked table of each antenna by using a task number as an address index.

The antenna searching resource storage unit 322 is configured to store the number of effective search resources occupied by each antenna by using an antenna number as an index.

The antenna task number storage unit 323 is configured to store the number of effective tasks on each antenna by using an antenna number as an index.

The antenna last task storage unit 324 is configured to store a task number of a last effective task on each antenna by using an antenna number as an index.

The task finding process unit 325 is configured to search the task information table to obtain a task to be processed on each antenna, rank the numbers of effective search resources occupied by all the antennas, and process the task to be processed on all the antennas according to the rank under the control of the task finding state machine.

The task running storage unit 326 is configured to store the task of each antenna.

Herein, the task information table saves the task state, i.e., whether the task is effective or whether the effective time of the task has been started, by using the task number as an address index.

The antenna linked list stores the task number of an effective task previous to the effective task of the current task number in this slot of this antenna by using the task number as an index.

In actual applications, the antenna searching resource storage unit 322 may be an antenna searching resource register set, the antenna task number storage unit 323 may be an antenna task number register set, and the antenna last task storage unit 324 may be an antenna last task register set.

Preferably, the task request module 33 includes: a task parameter storage unit 331, a task request storage unit 332, a task information table storage unit 334, and a task request processing unit 333.

The task parameter storage unit 331 is configured to store the task parameter.

The task request storage unit 332 is configured to store the task request, is generally an interface with the software, and is implemented by First Input First Output (FIFO).

The task information table storage unit 334 is configured to store the task information table.

The task request processing unit 333 is configured to read the task request and update the task parameters in the task information table under the control of the task request state machine 311.

Herein, the task parameter includes: an antenna number, a width of searching window, a scramble, and the like.

## Claims

1. A task processing method for implementing multipath searching, **characterized in that**, the method comprises:
searching (101) a task information table at regular time to obtain a task to be processed on each antenna, and ranking all the antennas depending on numbers of effective search resources occupied by the antennas; and
processing (102) the tasks to be processed on all the antennas according to the rank.

2. The method of claim 1, wherein before searching (101) the task information table at regular time, the method further comprises: reading a task request at regular time, and updating a task parameter in the task information table (201).

3. The method of claim 2, wherein the reading the task request at regular time, and updating the task parameter in the task information table (201) comprises:
reading a task request in each slot, reading a task parameter of an address corresponding to a task number carried in the task request, and updating the task parameter into the task information table corresponding to the task number.

4. The method of claim 3, wherein the searching the task information table at regular time (101) comprises:
starting the search to the task information table in the beginning of each slot, searching and reading the updated task information table according to the task number sequentially, writing the task number of the read effective task into a corresponding antenna linked list according to an antenna number included in the task parameter read from the task information table, until the search to the entire task information table is completed, so as to obtain the antenna linked lists of different antenna numbers, a sum of tasks to be processed on different antennas, and a sum of effective search resources occupied by each antenna.

5. The method of claim 4, wherein the processing (102) tasks to be processed on all the antennas according to the rank is implemented by:
reading an antenna number of an antenna which occupies the maximum effective search resources according to the rank of the numbers of the effective search resources occupied by all the antennas, reading a last effective task number on the antenna according to the antenna number, reading a task parameter of a corresponding address in the task information table according to the effective task number, writing the task into a task running storage area, and reading a previous effective task number on the antenna, until all the effective tasks on the antenna are written into the task running storage area, and the process to the antenna task is completed; and then processing the antenna which occupies the second maximum effective search resources; and so on, till all the antennas are processed.

6. A task processing device for implementing multipath searching, **characterized in that**, the device comprises: a task state machine control module (31) and a task finding module (32), wherein
the task state machine control module (31) is configured to achieve a state control to the task finding module (32); and
the task finding module (32) is configured to search a task information table at regular time to obtain a task to be processed on each antenna, rank numbers of effective searching resources occupied by all the antenna, and process the tasks to be processed on all the antenna according to the rank.

7. The device of claim 6, further comprising:
a task request module (33) configured to read a task request at regular time, and update a task parameter in the task information table.

8. The device of claim 7, wherein the task state machine control module (31) is further configured to achieve a state control to the task request module (33) and a state control to a task running.

9. The device of claim 8, wherein the task state machine control module (31) comprises:
a task request state machine (311), a task finding state machine (312), and a task running state machine (313), wherein
the task request state machine (311) is configured to achieve a state control to the task request in the task request module;
the task finding state machine (312) is configured to achieve a state control to a task finding in the task finding module; and
the task running state machine (313) is configured to achieve a state control to the task running.

10. The device of claim 8, wherein the task request module (33) comprises: a task parameter storage unit (331), a task request storage unit (332), a task information table storage unit (334), and a task request processing unit (333), wherein
the task parameter storage unit (331) is configured to store the task parameter;
the task request storage unit (332) is configured to store the task request;
the task information table storage unit (334) is configured to store the task information table; and
the task request processing unit (333) is configured to read the task request at regular time and update the task parameters in the task information table under the control of the task request state machine (311).

11. The device of claim 8, wherein the task finding module (32) comprises: an antenna linked list storage unit (321), an antenna searching resource number storage unit (322), an antenna task number storage unit (323), an antenna last task storage unit (324), a task running storage unit (326), and a task finding process unit (325), wherein
the antenna linked list storage unit (321) is configured to store an antenna linked table of each antenna;
the antenna searching resource number storage unit (322) is configured to store the number of effective search resources occupied by each antenna;
the antenna task number storage unit (323) is configured to store the number of effective tasks on each antenna;
the antenna last task storage unit (324) is configured to store a task number of a last effective task on each antenna; and
the task finding process unit (325) is configured to, under the control of the task finding state machine (312), search the task information table to obtain a task to be processed on each antenna, rank the numbers of effective search resources occupied by all the antenna, and process the task to be processed on all the antenna according to the rank.

## Patentansprüche

1. Aufgabenverarbeitungsverfahren zum Implementieren einer Mehrpfadsuche, **dadurch gekennzeichnet, dass** das Verfahren aufweist:
Durchsuchen (101) einer Aufgabeninformationstabelle zu einer regelmäßigen Zeit, um eine Aufgabe zu erhalten, die an jeder Antenne verarbeitet werden soll, und Ordnen aller Antennen abhängig von den Nummern effektiver Suchquellen, die von den Antennen benutzt werden, dem Rang nach; und
Verarbeiten (102) der Aufgaben, die an allen Antennen verarbeitet werden sollen, gemäß dem Rang.

2. Verfahren nach Anspruch 1, wobei das Verfahren vor dem Durchsuchen (101) der Aufgabeninformationstabelle zu einer regelmäßigen Zeit aufweist: Lesen einer Aufgabenanforderung zu einer regelmäßigen Zeit und Aktualisieren eines Aufgabenparameters in der Aufgabeninformationstabelle (201).

3. Verfahren nach Anspruch 2, wobei das Lesen der Aufgabenanforderung zu einer regelmäßigen Zeit und das Aktualisieren des Aufgabenparameters in der Aufgabeninformationstabelle (201) aufweist:
Lesen einer Aufgabenanforderung in jedem Slot, Lesen eines Aufgabenparameters einer Adresse, die einer Aufgabennummer entspricht, die in der Aufgabenanforderung befördert wird, und Aktualisieren des Aufgabenparameters in der Aufgabeninformationstabelle entsprechend der Aufgabennummer.

4. Verfahren nach Anspruch 3, wobei das Durchsuchen der Aufgabeninformationstabelle zu einer regelmäßigen Zeit (101) aufweist:
Beginnen, die Aufgabeninformationstabelle am Anfang jedes Slots zu durchsuchen, Durchsuchen und Lesen der aktualisierten Aufgabeninformationstabelle der Reihe nach gemäß der Aufgabennummer, Schreiben der Aufgabennummer der gelesenen effektiven Aufgabe in eine entsprechende Antennenverbindungsliste gemäß einer Antennennummer, die in dem Aufgabenparameter enthalten ist, der aus der Aufgabeninformationstabelle gelesen wird, bis das Durchsuchen der gesamten Aufgabeninformationstabelle abgeschlossen ist, um die Antennenverbindungslisten verschiedener Antennennummern, eine Summe von Aufgaben, die an verschiedenen Antennen verarbeitet werden sollen, und eine Summe effektiver Suchquellen, die von jeder Antenne benutzt werden, zu erhalten.

5. Verfahren nach Anspruch 4, wobei die Verarbeitung (102) von Aufgaben, die auf allen Antennen gemäß dem Rang verarbeitet werden sollen, implementiert ist durch:
Lesen einer Antennennummer einer Antenne, die die maximal effektiven Suchquellen gemäß dem Rang der Nummern effektiver Suchquellen, die von allen Antennen benutzt werden, benutzt, Lesen einer letzten effektiven Aufgabennummer an der Antenne gemäß der Antennennummer, Lesen eines Aufgabenparameters einer entsprechenden Adresse in der Aufgabeninformationstabelle gemäß der effektiven Aufgabennummer, Schreiben der Aufgabe in einen Aufgabenablaufspeicherbereich und Lesen einer vorhergehenden effektiven Aufgabennummer auf der Antenne, bis alle effektiven Aufgaben auf der Antenne in den Aufgabenablaufspeicherbereich geschrieben sind und das Verarbeiten bis zu der Antennenaufgabe abgeschlossen ist; und dann Verarbeiten der Antenne, die die zweit maximal effektiven Suchquellen benutzt; und so weiter, bis alle Antennen verarbeitet sind.

6. Aufgabenverarbeitungsvorrichtung zur Implementierung einer Mehrpfadsuche, **dadurch gekennzeichnet, dass** die Vorrichtung aufweist: ein Aufgabenzustandsmaschinensteuermodul (31) und ein Aufgabenermittlungsmodul (32), wobei
das Aufgabenzustandsmaschinensteuermodul (31) konfiguriert ist, um eine Zustandssteuerung an dem Aufgabenermittlungsmodul (32) zu erreichen; und
das Aufgabenermittlungsmodul (32) konfiguriert ist, um eine Aufgabeninformationstabelle zu einer regelmäßigen Zeit zu durchsuchen, um eine Aufgabe, die an jeder Antenne verarbeitet werden soll, zu erhalten, Nummern effektiver Suchressourcen, die von allen Antennen benutzt werden, dem Rang nach zu ordnen, und die Aufgaben, die an allen Antennen verarbeitet werden sollen, gemäß dem Rang zu verarbeiten.

7. Vorrichtung nach Anspruch 6, die ferner aufweist:
ein Aufgabenanforderungsmodul (33), das konfiguriert ist, um eine Aufgabenanforderung zu einer regelmäßigen Zeit zu lesen und einen Aufgabenparameter in der Aufgabeninformationstabelle zu aktualisieren.

8. Vorrichtung nach Anspruch 7, wobei das Aufgabenzustandsmaschinensteuermodul (31) ferner konfiguriert ist, um eine Zustandssteuerung an dem Aufgabenanforderungsmodul (33) und eine Zustandssteuerung an einer laufenden Aufgabe zu erreichen.

9. Vorrichtung nach Anspruch 8, wobei das Aufgabenzustandsmaschinensteuermodul (31) aufweist:
eine Aufgabenanforderungszustandsmaschine (311), eine Aufgabenermittlungszustandsmaschine (312) und eine Aufgabenablaufzustandsmaschine (313), wobei
die Aufgabenanforderungszustandsmaschine (311) konfiguriert ist, um eine Zustandssteuerung der Aufgabenanoforderung in dem Aufgabenanforderungsmodul zu erreichen;
die Aufgabenermittlungszustandsmaschine (312) konfiguriert ist, um eine Zustandssteuerung einer Aufgabenermittlung in dem Aufgabenermittlungsmodul zu erreichen; und
die Aufgabenablaufzustandsmaschine (313) konfiguriert ist, um eine Zustandssteuerung des Aufgabenablaufs zu erreichen.

10. Vorrichtung nach Anspruch 8, wobei das Aufgabenanforderungsmodul (33) aufweist: eine Aufgabenparameterspeichereinheit (331), eine Aufgabenanforderungsspeichereinheit (332), eine Aufgabeninformationstabellenspeichereinheit (334) und eine Aufgabenanforderungsverarbeitungseinheit (333), wobei
die Aufgabenparameterspeichereinheit (331) konfiguriert ist, um den Aufgabenparameter zu speichern;
die Aufgabenanforderungsspeichereinheit (332) konfiguriert ist, um die Aufgabenanforderung zu speichern;
die Aufgabeninformationstabellenspeichereinheit (334) konfiguriert ist, um die Aufgabeninformationstabelle zu speichern; und
die Aufgabenanforderungsverarbeitungseinheit (333) konfiguriert ist, um die Aufgabenanforderung zu einer regelmäßigen Zeit zu lesen und die Aufgabenparameter in der Aufgabeninformationstabelle unter der Steuerung der Aufgabenanforderungszustandsmaschine (311) zu steuern.

11. Vorrichtung nach Anspruch 8, wobei das Aufgabenermittlungsmodul (32) aufweist: eine Antennenverbindungslistenspeichereinheit (321), eine Antennensuchquellennummernspeichereinheit (322), eine Antennenaufgabennummernspeichereinheit (323), eine Speichereinheit (324) für die letzte Antennenaufgabe, eine Aufgabenablaufspeichereinheit (326) und eine Aufgabenermittlungsverarbeitungseinheit (325), wobei
die Antennenverbindungslistenspeichereinheit (321) konfiguriert ist, um eine Antennenverbindungstabelle jeder Antenne zu speichern;
die Antennensuchquellennummernspeichereinheit (322) konfiguriert ist, um die Nummer effektiver Suchquellen zu speichern, die von jeder Antenne benutzt werden;
die Antennenaufgabennummernspeichereinheit (323) konfiguriert ist, um die Nummer effektiver Aufgaben an jeder Antenne zu speichern;
die Speichereinheit (324) für die letzte Antennenaufgabe konfiguriert ist, um eine Aufgabennummer einer letzten effektiven Aufgabe an jeder Antenne zu speichern; und
die Aufgabenermittlungsverarbeitungseinheit (325) konfiguriert ist, um unter der Steuerung der Aufgabenermittlungszustandsmaschine (312) die Aufgabeninformationstabelle zu durchsuchen, um eine Aufgabe zu erhalten, die an jeder Antenne verarbeitet werden soll, die Nummern effektiver Suchressourcen, die von allen Antennen benutzt werden, dem Rang nach zu ordnen und die Aufgabe, die an allen Antennen verarbeitet werden soll, gemäß dem Rang zu verarbeiten.

## Revendications

1. Procédé de traitement de tâche pour mettre en oeuvre une recherche par trajets multiples, **caractérisé en ce que** le procédé comprend :
la recherche (101) dans une table d'informations sur les tâches à intervalles réguliers afin d'obtenir une tâche à traiter sur chaque antenne, et le classement de toutes les antennes en fonction des nombres de ressources de recherche effectives occupées par les antennes ; et
le traitement (102) des tâches à traiter sur toutes les antennes en fonction du classement.

2. Procédé selon la revendication 1, dans lequel, avant la recherche (101) dans la table d'informations sur les tâches à intervalles réguliers, le procédé comprend en outre : la lecture d'une demande de tâche à intervalles réguliers et la mise à jour d'un paramètre de tâche dans la table d'informations sur les tâches (201) .

3. Procédé selon la revendication 2, dans lequel la lecture de la demande de tâche à intervalles réguliers et la mise à jour du paramètre de tâche dans la table d'informations sur les tâches (201) comprennent :
la lecture d'une demande de tâche dans chaque tranche, la lecture d'un paramètre de tâche d'une adresse correspondant à un numéro de tâche figurant dans la demande de tâche, et la mise à jour du paramètre de tâche dans la table d'informations sur les tâches correspondant au numéro de tâche.

4. Procédé selon la revendication 3, dans lequel la recherche dans la table d'informations sur les tâches à intervalles réguliers (101) comprend :
le lancement de la recherche dans la table d'informations sur les tâches au début de chaque tranche, la recherche et la lecture dans la table d'informations sur les tâches mise à jour en fonction du numéro de tâche, de manière séquentielle, l'écriture du numéro de tâche de la tâche effective de lecture dans une liste liée à l'antenne correspondante selon un numéro d'antenne inclus dans le paramètre de tâche lu dans la table d'informations sur les tâches, jusqu'à ce que la recherche dans l'ensemble de la table d'informations sur les tâches soit terminée , de manière à obtenir les listes liées aux antennes pour différents numéros d'antenne, une somme des tâches à traiter sur différentes antennes et une somme des ressources de recherche effectives occupées par chaque antenne.

5. Procédé selon la revendication 4, dans lequel les tâches de traitement (102) à effectuer sur toutes les antennes en fonction du classement sont mises en oeuvre de la façon suivante :
lecture d'un numéro d'antenne d'une antenne qui occupe le maximum de ressources de recherche effectives en fonction du classement des nombres des ressources de recherche effectives occupées par toutes les antennes, lecture d'un dernier numéro de tâche effective sur l'antenne en fonction du numéro d'antenne, lecture d'un paramètre de tâche d'une adresse correspondante dans la table d'informations sur les tâches en fonction du numéro de tâche effective, écriture de la tâche dans une zone de stockage d'exécution de tâche et lecture d'un numéro de tâche effective précédent sur l'antenne jusqu'à ce que toutes les tâches effectives sur l'antenne soient écrites dans la zone de stockage d'exécution de tâche et que le traitement de la tâche de l'antenne soit terminé ; puis traitement de l'antenne qui occupe le second maximum de ressources de recherche effectives ; et ainsi de suite jusqu'à ce que toutes les antennes soient traitées.

6. Dispositif de traitement de tâche pour mettre en oeuvre une recherche par trajets multiples, **caractérisé en ce que** le dispositif comprend : un module de commande de machine à états de tâches (31) et un module de recherche de tâches (32), dans lequel
le module de commande de machine à états de tâches (31) est configuré pour réaliser un contrôle d'état du module de recherche de tâches (32) ; et
le module de recherche de tâches (32) est configuré pour rechercher dans une table d'informations sur les tâches à intervalles réguliers afin d'obtenir une tâche à traiter sur chaque antenne, pour classer les nombres de ressources de recherche effectives occupées par toute l'antenne et traiter les tâches à traiter sur toute l'antenne en fonction du classement.

7. Dispositif selon la revendication 6, comprenant en outre :
un module de demande de tâche (33) configuré pour lire une demande de tâche à intervalles réguliers et mettre à jour un paramètre de tâche dans la table d'informations sur les tâches.

8. Dispositif selon la revendication 7, dans lequel le module de commande de machine à états de tâches (31) est en outre configuré pour réaliser un contrôle d'état du module de demande de tâches (33) et un contrôle d'état d'une exécution de tâche.

9. Dispositif selon la revendication 8, dans lequel le module de commande de machine à états de tâches (31) comprend :
une machine d'état de demande de tâche (311), une machine d'état de recherche de tâche (312) et une machine d'état d'exécution de tâche (313), dans lequel
la machine d'état de demande de tâche (311) est configurée pour réaliser un contrôle d'état de la demande de tâche dans le module de demande de tâche ;
la machine d'état de recherche de tâche (312) est configurée pour réaliser un contrôle d'état d'une recherche de tâche dans le module de recherche de tâche ; et
la machine d'état d'exécution de tâche (313) est configurée pour réaliser un contrôle d'état de l'exécution de tâche.

10. Dispositif selon la revendication 8, dans lequel le module de demande de tâche (33) comprend : une unité de stockage de paramètre de tâche (331), une unité de stockage de demande de tâche (332), une unité de stockage de table d'informations sur les tâches (334) et une unité de traitement de demande de tâche (333), dans lequel
l'unité de stockage de paramètre de tâche (331) est configurée pour stocker le paramètre de tâche ;
l'unité de stockage de demande de tâche (332) est configurée pour stocker la demande de tâche ;
l'unité de stockage de table d'informations sur les tâches (334) est configurée pour stocker la table d'informations sur les tâches ; et
l'unité de traitement de demande de tâche (333) est configurée pour lire la demande de tâche à intervalles réguliers et mettre à jour les paramètres de tâche dans la table d'informations sur les tâches sous le contrôle de la machine d'état de demande de tâche (311).

11. Dispositif selon la revendication 8, dans lequel le module de recherche de tâche (32) comprend : une unité de stockage de liste liée aux antennes (321), une unité de stockage de nombre de ressource de recherche d'antenne (322), une unité de stockage de numéro de tâche d'antenne (323), une unité de stockage de dernière tâche d'antenne (324), une unité de stockage d'exécution de tâche (326), et une unité de traitement de recherche de tâche (325), dans lequel
l'unité de stockage de liste liée aux antennes (321) est configurée pour stocker une table liée aux antennes pour chaque antenne ;
l'unité de stockage de nombre de ressources de recherche d'antenne (322) est configurée pour stocker le nombre de ressources de recherche effectives occupées par chaque antenne ;
l'unité de stockage de numéro de tâches d'antenne (323) est configurée pour stocker le nombre de tâches effectives pour chaque antenne ;
l'unité de stockage de dernière tâche d'antenne (324) est configurée pour stocker un numéro de tâche d'une dernière tâche effective pour chaque antenne ; et
l'unité de traitement de recherche de tâche (325) est configurée pour, sous le contrôle de la machine d'état de recherche de tâche (312), rechercher dans la table d'informations sur les tâches afin d'obtenir une tâche à traiter sur chaque antenne, classer le nombre de ressources de recherche effectives occupées par toute l'antenne, et traiter la tâche à traiter sur toute l'antenne en fonction du classement.
